# EUROPEAN PATENT APPLICATION

(11) **EP 4 583 476 A1**
(43) Date of publication of application: **09.07.2025**
(21) Application number: 23872893.5
(22) Date of filing: 15.09.2023
(51) Int. Cl.: H04L 27/26, H04L 5/00, H04W 72/23, H04W 72/12

(54) **APPARATUS AND METHOD FOR IMPROVING COVERAGE IN WIRELESS COMMUNICATION SYSTEM**

(30) Priority: 29.09.2022 KR 20220124735
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR); KIM, Kijun, Seoul 06772 (KR)
(74) Representative: Plasseraud IP
(86) International application number: PCT/KR2023/013957
(87) International publication number: WO 2024/071775

(57) **Abstract**

A method of operating a user equipment (UE) in a wireless communication system is provided. The method includes receiving, from a base station, an indication for an uplink waveform of Discrete Fourier Transform-spread-Orthogonal Frequency Division Multiplexing (DFT-s-OFDM), determining a demodulation reference signal (DMRS) sequence for a DMRS symbol transmission among a computer generated sequence (CGS) and a Zadoff-Chu (ZC) sequence; determining a length of the DMRS sequence based on a number of all allocated physical resource blocks (PRBs) including first PRBs for a tone reservation and second PRBs not for the tone reservation; performing the DMRS symbol transmission using the DMRS sequence based on the determined length; and transmitting a physical uplink shared channel (PUSCH) based on the DFT-s-OFDM using the second PRBs.

## Description

### [Technical Field]

The present disclosure relates to a wireless communication system. More particularly, the present disclosure relates to a device and method for enhancing a coverage in a wireless communication system.

### [Background Art]

As more and more communication devices require larger communication capacity, there is a need for enhanced mobile broadband communication compared to the existing radio access technology. Massive machine type communications (MTC) which provide various services anytime and anywhere by connecting many devices and objects are also one of the major issues to be considered in next-generation communications. In addition, a communication system design considering services/UE sensitive to reliability and latency is also being discussed. As above, the introduction of next generation radio access technology considering enhanced mobile broadband communication, massive MTC, ultra-reliable and low latency communication (URLLC), etc. is discussed, and the technology is called NR for convenience in the present disclosure.

### [Disclosure]

### [Technical Problem]

In order to solve the above-described and other problems, the present disclosure provides a device and method for enhancing a coverage in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

According to various embodiments of the present disclosure, there is provided a method of operating a user equipment (UE) in a wireless communication system comprising receiving, from a base station (BS), an indication for an uplink waveform of Discrete Fourier Transform-spread-Orthogonal Frequency Division Multiplexing (DFT-s-OFDM); determining a demodulation reference signal (DMRS) sequence for a DMRS symbol transmission among a computer generated sequence (CGS) and a Zadoff-Chu (ZC) sequence; determining a length of the DMRS sequence based on a number of all allocated physical resource blocks (PRBs) including first PRBs for a tone reservation and second PRBs not for the tone reservation; performing the DMRS symbol transmission using the DMRS sequence based on the determined length; and transmitting a physical uplink shared channel (PUSCH) based on the DFT-s-OFDM using the second PRBs.

According to various embodiments of the present disclosure, there is provided a method of operating a base station (BS) in a wireless communication system comprising transmitting, to a user equipment (UE), an indication for an uplink waveform of Discrete Fourier Transform-spread-Orthogonal Frequency Division Multiplexing (DFT-s-OFDM), wherein a demodulation reference signal (DMRS) sequence is determined from among a computer generated sequence (CGS) and a Zadoff-Chu (ZC) sequence, and wherein a length of the DMRS sequence is determined based on a number of all allocated physical resource blocks (PRBs) including first PRBs for a tone reservation and second PRBs not for the tone reservation; receiving a DMRS symbol using the DMRS sequence based on the determined length; and receiving a physical uplink shared channel (PUSCH) based on the DFT-s-OFDM using the second PRBs.

According to various embodiments of the present disclosure, there is provided a user equipment (UE) in a wireless communication system, the UE comprising a transceiver, at least one processor, and at least one memory operably connectable to the at least one processor and configured to store instructions performing operations based on being executed by the at least one processor, wherein the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and configured to store instructions performing operations based on being executed by the at least one processor, wherein the operations comprise all steps of a method of operating the base station according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a user equipment (UE) according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a base station according to various embodiments of the present disclosure.

### [Advantageous Effects]

In order to solve the above-described and other problems, the present disclosure can provide a device and method for enhancing a coverage in a wireless communication system.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates physical channels used in a system applicable to the present disclosure and an example of a general signal transmission method using the physical channels.
FIG. 2 illustrates an example of a structure of a radio frame used in a system applicable to the present disclosure.
FIG. 3 illustrates an example of a slot structure used in a system applicable to the present disclosure.
FIG. 4 illustrates an example of a slot structure of a radio frame used in a system applicable to the present disclosure.
FIG. 5 illustrates an example of an operation process of a UE in a system applicable to the present disclosure.
FIG. 6 illustrates an example of an operation process of a base station in a system applicable to the present disclosure.
FIG. 7 illustrates an example of a structure of a first device and a second device in a system applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

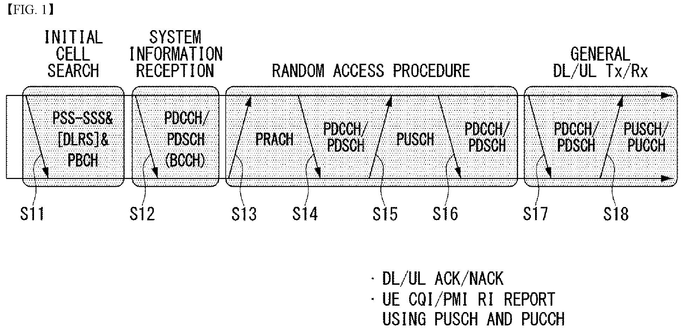

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation, such as synchronizing with a base station, in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception (S17) and PUSCH/physical uplink control channel (PUCCH) transmission (S18), as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

### Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

### Radio Frame Structure

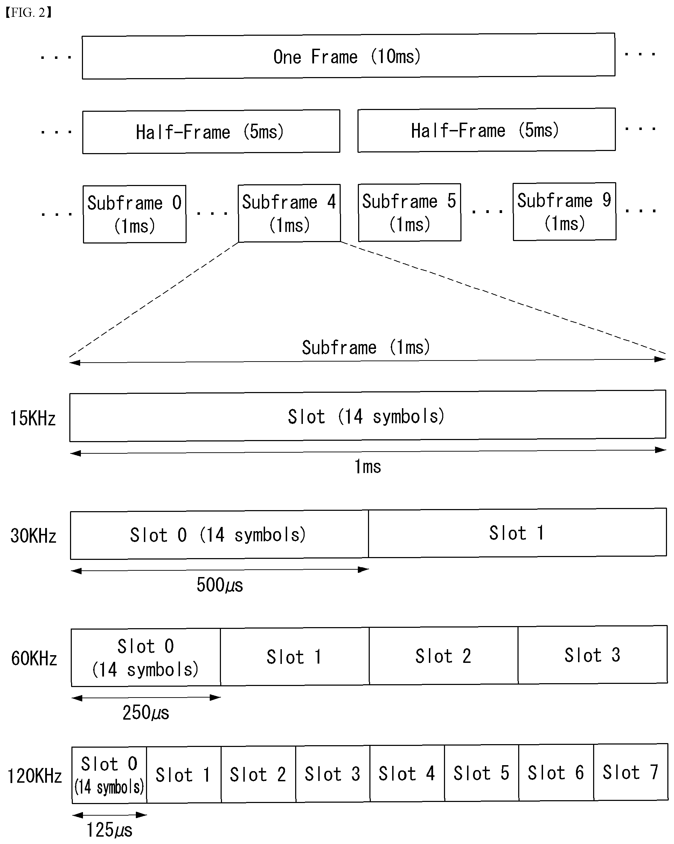

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^u) | N^{slot}_{symb} | N^{frarne,u} ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

N^{slot}_{symb} is the number of symbols in the slot. N^{frame,u}ₛₗₒₜ is the number of slots in the frame. N^{subframe,u}ₛₗₒₜ is the number of slots in the subframe.

Table 2 shows that when the extended CP is used, the number of symbols per slot, the number of slots per frame, and the number of slots per subframe vary depending on the SCS.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

**[Table 3]**

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

**[Table 4]**

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

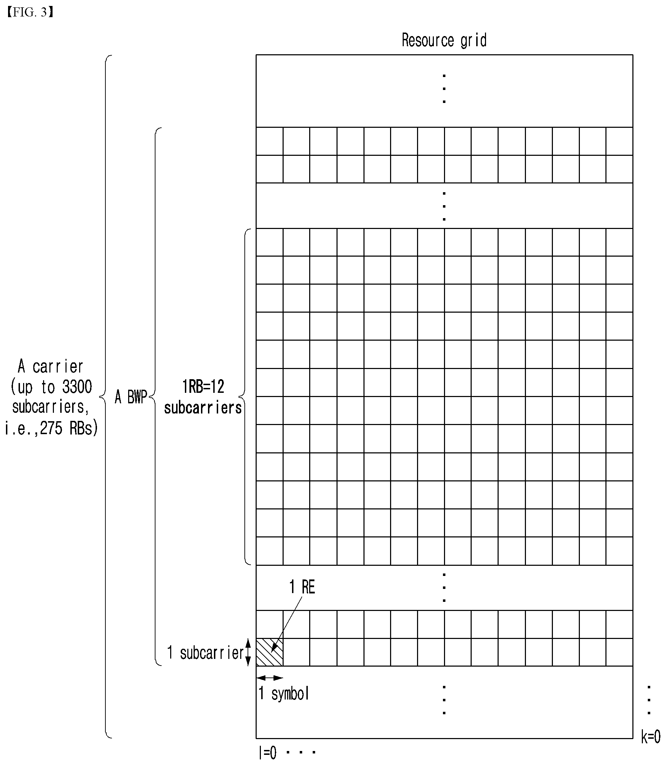

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

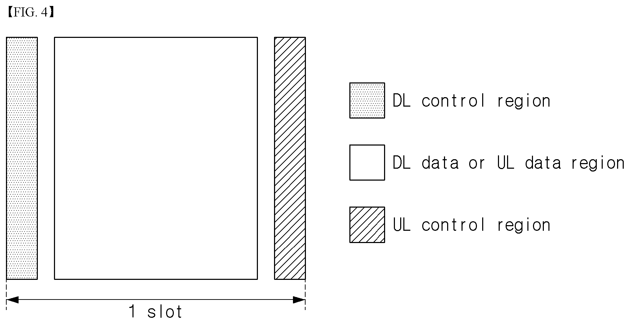

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

### Composition and Method of the Invention

Currently, in NR, it is defined that the base station indicates which waveform to be used among CP-OFDM and DFT-s-OFDM via RRC signaling (e.g., SIB1, UE specific RRC signaling, etc.).

To explain in more detail what is defined in 3GPP TS 38.331, in the 4-step RACH procedure, a waveform of Msg. 3 PUSCH is defined to use DFT-s-OFDM as an UL waveform if "msg3-transformPrecoder" is set to enable, and to use CP-OFDM as the UL waveform if the "msg3-transformPrecoder" parameter field is empty. In the 2-step RACH procedure, a waveform of Msg. A PUSCH is defined to use DFT-s-OFDM if "msgA-TransformPrecoder" is set to enable, and to use CP-OFDM if it is set to disable.

Finally, waveforms of other UL channels (e.g., normal PUSCH, configured PUSCH, etc.) except for the Msg. 3 PUSCH and the Msg. A PUSCH are defined to use DFT-s-OFDM if "transformPrecoder" is set to enable, and to use CP-OFDM if it is set to disable. Additionally, if the parameter "transformPrecoder" is not indicated separately, it is defined to follow the configuration of "msg3-transformPrecoder".

In the present disclosure, the expression that the base station configures/indicates the UL waveform to CP-OFDM means that values of "msg3-transformPrecoder" and/or "msgA-TransformPrecoder" and/or "transformPrecoder", which are parameters transmitted via RRC signaling (e.g., SIB1, UE specific RRC signaling, etc.), have been set to disable, and also means that the "transformPrecoder" value, which can be newly defined in DCI format 0_0, 0_1, 0_2, etc. (or can be used by reinterpreting an existing field by the UE), has been set to disable. On the other hand, the expression that the base station configures/indicates the UL waveform to DFT-s-OFDM means that values of "msg3-transformPrecoder" and/or "msgA-TransformPrecoder" and/or "transformPrecoder", which are parameters transmitted via RRC signaling (e.g., SIB1, UE specific RRC signaling, etc.), have been set to enable, and also means that the "transformPrecoder" value, which can be newly defined in DCI format 0_0, 0_1, 0_2, etc. (or can be used by reinterpreting the existing field by the UE), has been set to enable.

If the DFT-s-OFDM is used, a tone reservation method may be introduced to reduce maximum power reduction (MPR)/peak-to-average power ratio (PAR). The present disclosure proposes UE/base station configuration methods that can be newly considered based on the tone reservation method.

### UE/Base station operation based on Tone Reservation

If a base station is configured/indicated to perform a tone reservation, a UE may be configured to transmit UL signal/channel, such as PUSCH (and/or PUCCH), by filling data in tones other than reserved tones. In this instance, if DFT-s-OFDM is configured/indicated to be used for PUSCH transmission, the base station needs to configure/indicate through PUSCH scheduling that the PUSCH to be transmitted using the DFT-s-OFDM occupies the number of PRBs that are multiples of 2 and/or 3 and/or 5, and therefore the number of PRBs to be configured/indicated for tone reservation needs to match this. That is, if the UE transmits PUSCH data using the DFT-s-OFDM in a region other than a tone reservation region configured/indicated by the base station, the number of consecutive PRBs allocated for data transmission needs to be multiples of 2 and/or 3 and/or 5, and the PRBs corresponding to a remaining region may be used as PRBs for tone reservation.

If an UL waveform configured/indicated by the base station is the DFT-s-OFDM, when a region for allocated data transmission excluding the tone reservation region configured/indicated by the base station is not the multiples of 2 and/or 3 and/or 5, the UE may be configured to sequentially select PRBs as many as the number of PRBs corresponding to the multiples of 2 and/or 3 and/or 5 that are less than or equal to the region for allocated data transmission, starting from the lowest PRB and perform the PUSCH transmission using the PRBs. In another method, if the UL waveform is the DFT-s-OFDM, when a region for allocated data transmission excluding the tone reservation region configured/indicated by the base station is not the multiples of 2 and/or 3 and/or 5, the UE may determine that a corresponding UL grant is not a valid scheduling and may not perform PUSCH transmission, or the UE may not perform the PUSCH transmission scheduled with the corresponding UL grant and may request the base station to transmit a new UL grant through a scheduling request (SR).

Even if the UL waveform configured/indicated by the base station is the DFT-s-OFDM, a DMRS symbol to be transmitted together with a PUSCH symbol using the DFT-s-OFDM is transmitted using a computer generated sequence (CGS) or a Zadoff-Chu (ZC) sequence, and therefore a length of a DMRS sequence does not need to be the multiples of 2 and/or 3 and/or 5. Characteristically, if the base station configures/indicates the number of PRBs for tone reservation and/or a location of the PRBs, the UE may be configured to determine the number of PRBs to transmit PUSCH data excluding the corresponding region and generate the length of the DMRS sequence based on the number of PRBs to transmit the PUSCH data. For example, if the ZC sequence is used as the DMRS sequence, when the number of REs occupied by the number of PRBs allocated to transmit the PUSCH data excluding the region for tone reservation is N, the UE may be configured to generate the ZC sequence that uses a prime number less than or equal to N as a base sequence index, and fill the sufficient number of samples through a cyclic shift until the sequence length is N.

Alternatively, since the CGS sequence and/or the ZC sequence itself are low PAPR sequences at first, the UE may determine the length of the DMRS sequence without following the tone reservation configured/indicated by the base station (i.e., including the PRBs for tone reservation). That is, the PUSCH symbol using the DFT-s-OFDM may transmit data in a PRB region excluding the PRBs for tone reservation, but the DMRS symbol may generate and transmit the DMRS sequence of an appropriate length, including the PRBs for tone reservation. In this case, the UE may select a prime number and generate the sequences using the cyclic shift in the same manner as mentioned above.

Next, a method may be considered in which whether to use a tone reservation operation of the UE is differently configured based on the number of PRBs allocated by the base station and/or a MCS field value and/or a coding rate, or the like. For example, if the base station configures/indicates a specific number and a specific location of PRBs for tone reservation, and if DFT-s-OFDM is configured/indicated as the UL waveform, and if resources for PUSCH transmission, that are greater than or equal to N RBs, are allocated through a FDRA field, the UE may transmit PUSCH data in a remaining region other than reserved tones based on pre-configured/pre-indicated tone reservation information. On the other hand, under the same conditions, if resources for PUSCH transmission, that are less than the N RBs, are allocated through the FDRA field, the UE may ignore the pre-configured/pre-indicated tone reservation information and transmit PUSCH data using all RBs allocated through the FDRA field. Characteristically, a value of N may be pre-configured/pre-defined by the base station via higher layer signaling (e.g., SIB, etc.), or pre-configured/pre-indicated to have a specific relationship based on an active UL BWP size. As a specific example, the value of N may be configured/indicated as 1/2 and/or 1/3 and/or 1/4, etc. of the number of PRBs constructing an active UL BWP.

The proposed method can be configured/applied to other UL signals/channels such as MSG3 PUSCH, MSGA preamble/PUSCH and/or PUSCH/PUCCH. In addition, since examples of the proposed method described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) can be defined as a rule so that the base station notifies the UE of the information via a predefined signal (e.g., a physical layer signal or a higher layer signal). For example, the higher layer may include one or more of functional layers such as MAC, RLC, PDCP, RRC, and SDAP.

Methods, embodiments or descriptions for implementing the methods proposed in the present disclosure can be individually applied or applied in combinations of one or more methods (or embodiments or descriptions).

### [Description of claims related to UE]

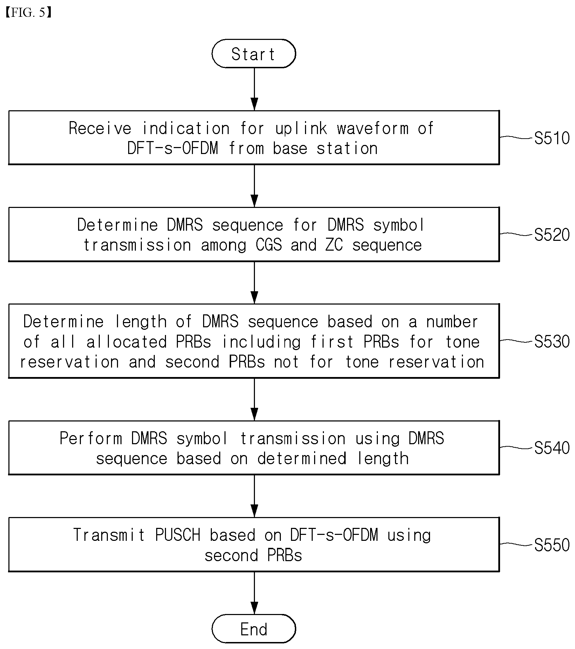

Below, the above-described embodiments are described in detail from a perspective of an operation of a UE with reference to FIG. 5. Methods to be described below are merely distinguished for convenience of explanation. Thus, as long as the methods are not mutually exclusive, it is obvious that partial configuration of any method can be substituted or combined with partial configuration of another method.

FIG. 5 illustrates an example of an operation process of a UE in a system applicable to the present disclosure.

In step S510, a UE receives, from a base station (BS), an indication for an uplink waveform of Discrete Fourier Transform-spread-Orthogonal Frequency Division Multiplexing (DFT-s-OFDM).

In step S520, the UE determines a demodulation reference signal (DMRS) sequence for DMRS symbol transmission among a computer generated sequence (CGS) and a Zadoff-Chu (ZC) sequence.

In step S530, the UE determines a length of the DMRS sequence based on a number of all allocated physical resource blocks (PRBs) including first PRBs for tone reservation and second PRBs not for the tone reservation.

In step S540, the UE performs the DMRS symbol transmission using the DMRS sequence based on the determined length.

In step S550, the UE transmits a physical uplink shared channel (PUSCH) based on the DFT-s-OFDM using the second PRBs.

According to various embodiments of the present disclosure, an embodiment of FIG. 5 may further include receiving, from the base station, an indication message for a number of the first PRBs for the tone reservation and a location of the first PRBs.

According to various embodiments of the present disclosure, the DMRS sequence may be based on a base sequence that uses a largest prime number less than or equal to N as a base sequence index. The N may be a number of resource elements (REs) occupied by all the allocated PRBs.

According to various embodiments of the present disclosure, the length of the DMRS sequence may be adjusted using a cyclic shift for the base sequence so that the length of the DMRS sequence is equal to the number of REs for all the allocated PRBs.

According to various embodiments of the present disclosure, the CGS and the ZC sequence may be sequences with a low peak-to-average power ratio (PAPR) among selectable sequences.

According to various embodiments of the present disclosure, the DMRS sequence may be related to all the PRBs. The PUSCH may be related to the second PRBs.

According to various embodiments of the present disclosure, the length of the DMRS sequence may be determined regardless of multiples of 2, 3, and 5.

According to various embodiments of the present disclosure, there is provided a user equipment (UE) in a wireless communication system. The UE may include a transceiver and at least one processor, and the at least one processor may be configured to perform the operation method of the UE based on FIG. 5.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 5 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 5.

### [Description of claims related to BS]

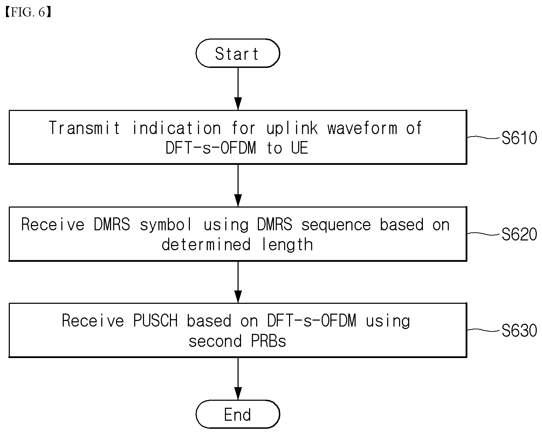

Below, the above-described embodiments are described in detail from a perspective of an operation of a base station with reference to FIG. 6. Methods to be described below are merely distinguished for convenience of explanation. Thus, as long as the methods are not mutually exclusive, it is obvious that partial configuration of any method can be substituted or combined with partial configuration of another method.

FIG. 6 illustrates an example of an operation process of a base station in a system applicable to the present disclosure.

In step S610, a base station transmits, to a user equipment (UE), an indication for an uplink waveform of Discrete Fourier Transform-spread-Orthogonal Frequency Division Multiplexing (DFT-s-OFDM). A demodulation reference signal (DMRS) sequence may be determined from among a computer generated sequence (CGS) and a Zadoff-Chu (ZC) sequence. A length of the DMRS sequence may be determined based on a number of all allocated physical resource blocks (PRBs) including first PRBs for tone reservation and second PRBs not for the tone reservation.

In step S620, the base station receives a DMRS symbol using the DMRS sequence based on the determined length.

In step S630, the base station receives a physical uplink shared channel (PUSCH) based on the DFT-s-OFDM using the second PRBs.

According to various embodiments of the present disclosure, an embodiment of FIG. 6 may further include transmitting, to the UE, an indication message for a number of the first PRBs for the tone reservation and a location of the first PRBs.

According to various embodiments of the present disclosure, the DMRS sequence may be based on a base sequence that uses a largest prime number less than or equal to N as a base sequence index. The N may be a number of resource elements (REs) occupied by all the allocated PRBs.

According to various embodiments of the present disclosure, the length of the DMRS sequence may be adjusted using a cyclic shift for the base sequence so that the length of the DMRS sequence is equal to the number of REs for all the allocated PRBs.

According to various embodiments of the present disclosure, the CGS and the ZC sequence may be sequences with a low peak-to-average power ratio (PAPR) among selectable sequences.

According to various embodiments of the present disclosure, the DMRS sequence may be related to all the PRBs. The PUSCH may be related to the second PRBs.

According to various embodiments of the present disclosure, the length of the DMRS sequence may be determined regardless of multiples of 2, 3, and 5.

According to various embodiments of the present disclosure, there is provided a base station in a wireless communication system. The base station may include a transceiver and at least one processor, and the at least one processor may be configured to perform the operation method of the BS based on FIG. 6.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 6 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 6.

### Wireless device applicable to the present disclosure

Examples of wireless devices to which various embodiments of the present disclosure are applied are described below.

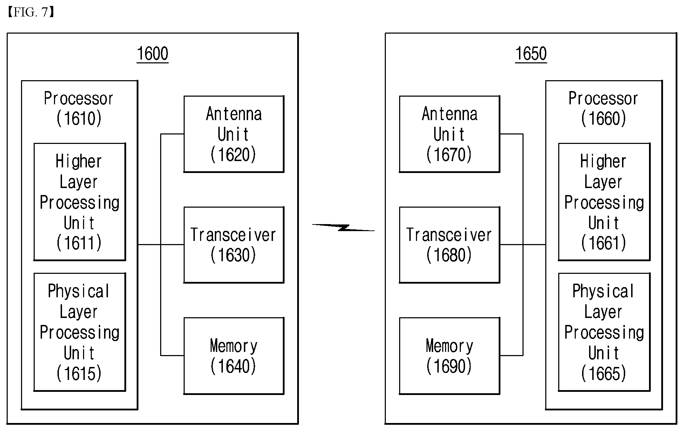

FIG. 7 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include various other wireless communication technologies as well as LTE, NR, and 6G.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:
receiving, from a base station (BS), an indication for an uplink waveform of Discrete Fourier Transform-spread-Orthogonal Frequency Division Multiplexing (DFT-s-OFDM);
determining a demodulation reference signal (DMRS) sequence for a DMRS symbol transmission among a computer generated sequence (CGS) and a Zadoff-Chu (ZC) sequence;
determining a length of the DMRS sequence based on a number of all allocated physical resource blocks (PRBs) including first PRBs for a tone reservation and second PRBs not for the tone reservation;
performing the DMRS symbol transmission using the DMRS sequence based on the determined length; and
transmitting a physical uplink shared channel (PUSCH) based on the DFT-s-OFDM using the second PRBs.

2. The method of claim 1, further comprising receiving, from the base station, an indication message for a number of the first PRBs for the tone reservation and a location of the first PRBs.

3. The method of claim 1, wherein the DMRS sequence is based on a base sequence that uses a largest prime number less than or equal to N as a base sequence index, and
wherein the N is a number of resource elements (REs) occupied by all the allocated PRBs.

4. The method of claim 3, wherein the length of the DMRS sequence is adjusted using a cyclic shift for the base sequence so that the length of the DMRS sequence is equal to the number of REs for all the allocated PRBs.

5. The method of claim 1, wherein the CGS and the ZC sequence are sequences with a low peak-to-average power ratio (PAPR) among selectable sequences.

6. The method of claim 1, wherein the DMRS sequence is related to all the PRBs, and
wherein the PUSCH is related to the second PRBs.

7. The method of claim 1, wherein the length of the DMRS sequence is determined regardless of multiples of 2, 3, and 5.

8. A method of operating a base station (BS) in a wireless communication system, the method comprising:
transmitting, to a user equipment (UE), an indication for an uplink waveform of Discrete Fourier Transform-spread-Orthogonal Frequency Division Multiplexing (DFT-s-OFDM),
wherein a demodulation reference signal (DMRS) sequence is determined from among a computer generated sequence (CGS) and a Zadoff-Chu (ZC) sequence,
wherein a length of the DMRS sequence is determined based on a number of all allocated physical resource blocks (PRBs) including first PRBs for a tone reservation and second PRBs not for the tone reservation;
receiving a DMRS symbol using the DMRS sequence based on the determined length; and
receiving a physical uplink shared channel (PUSCH) based on the DFT-s-OFDM using the second PRBs.

9. The method of claim 8, further comprising transmitting, to the UE, an indication message for a number of the first PRBs for the tone reservation and a location of the first PRBs.

10. The method of claim 8, wherein the DMRS sequence is based on a base sequence that uses a largest prime number less than or equal to N as a base sequence index, and
wherein the N is a number of resource elements (REs) occupied by all the allocated PRBs.

11. The method of claim 10, wherein the length of the DMRS sequence is adjusted using a cyclic shift for the base sequence so that the length of the DMRS sequence is equal to the number of REs for all the allocated PRBs.

12. The method of claim 8, wherein the CGS and the ZC sequence are sequences with a low peak-to-average power ratio (PAPR) among selectable sequences.

13. The method of claim 8, wherein the DMRS sequence is related to all the PRBs, and
wherein the PUSCH is related to the second PRBs.

14. The method of claim 8, wherein the length of the DMRS sequence is determined regardless of multiples of 2, 3, and 5.

15. A user equipment (UE) in a wireless communication system, the UE comprising:
a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:
a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:
at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,
wherein the one or more instructions are configured to perform operations based on being executed by one or more processors, and
wherein the operations comprise all steps of a method according to any one of claims 1 to 7.

20. One or more non-transitory computer readable mediums storing one or more instructions,
wherein the one or more instructions are configured to perform operations based on being executed by one or more processors, and
wherein the operations comprise all steps of a method according to any one of claims 8 to 14.
